# FASCICULE DE BREVET EUROPEEN

(11) **EP 2 422 394 B1**
(45) Date de publication et mention de la délivrance du brevet: **12.08.2015**
(21) Numéro de dépôt: 10723715.8
(22) Date de dépôt: 21.04.2010
(51) Int. Cl.: H01M 8/12, H01M 8/04, B63G 8/08, H01M 8/06

(54) **DISPOSITIF COMPORTANT UNE PILE À COMBUSTIBLE DE PRODUCTION D'ÉLECTRICITÉ POUR SOUS-MARIN**
EINRICHTUNG MIT EINER BRENNSTOFFZELLE ZUR ERZEUGUNG VON ELEKTRIZITÄT FÜR EIN UNTERSEEBOOT
DEVICE COMPRISING A FUEL CELL FOR PRODUCING ELECTRICITY FOR A SUBMARINE

(30) Priorité: 21.04.2009 FR 0952602
(43) Date de publication de la demande: 29.02.2012
(73) Titulaire: DCNS, 75015 Paris (FR)
(72) Inventeur: RETHORE, Sylvain, 44700 Orvault (FR)
(74) Mandataire: Jacobson, Claude
(86) Numéro de dépôt international: PCT/FR2010/050764
(87) Numéro de publication internationale: WO 2010/122269

(56) Documents cités:
- GB-A- 2 250 130
- JP-A- 2003 045 444
- US-A1- 2009 004 529
- BURKE A A ET AL: "System modeling of an air-independent solid oxide fuel cell system for unmanned undersea vehicles" JOURNAL OF POWER SOURCES, ELSEVIER SA, CH, vol. 158, no. 1, 14 juillet 2006 (2006-07-14), pages 428-435, XP025085205 ISSN: 0378-7753 [extrait le 2006-07-14]
- PSOMA A ET AL: "Fuel cell systems for submarines: from the first idea to serial production" JOURNAL OF POWER SOURCES, ELSEVIER SA, CH, vol. 106, no. 1-2, 1 avril 2002 (2002-04-01), pages 381-383, XP004348713 ISSN: 0378-7753

## Description

L'invention a pour domaine celui des sous-marins et plus particulièrement des sous-marins comportant un dispositif de production d'électricité du type comprenant une pile à combustible.

Différents types de piles à combustible sont aujourd'hui connues.

Pour une utilisation à bord d'un sous-marin, il est actuellement envisagé d'utiliser un système embarqué de production d'hydrogène à partir du reformage d'un hydrocarbure, associé à une pile à combustible fonctionnant à basse température. Le document GB 2 250 130 A divulgue une telle pile fonctionnant à basse température.

Un tel dispositif de production d'électricité présente de nombreuses difficultés, liées notamment aux contraintes associées à une implantation dans un sous-marin. Ainsi, le stockage et la fourniture du gaz oxygéné et du combustible hydrogéné nécessaires au fonctionnement de la pile présentent des difficultés, telles que, par exemple, la mise en oeuvre de plusieurs réacteurs chimiques successifs dont les paramètres de fonctionnement respectifs sont difficiles à maîtriser.

En particulier, le reformage, en amont de la pile, requiert l'utilisation d'un brûleur catalytique spécifique apte à fournir l'énergie nécessaire à la réaction. Ce brûleur fonctionne en utilisant de l'oxygène. Or, l'autonomie d'un sous-marin étant limitée par la quantité d'oxygène qu'il peut embarquer, l'oxygène utilisé par le brûleur de reformage réduit d'autant l'autonomie du sous-marin.

De plus, le temps de démarrage du dispositif correspondant au temps nécessaire à l'établissement des réactions d'oxydo-réductions à l'intérieur de la pile, est long.

Enfin, les puissances théoriques que l'on pourrait atteindre avec de telles piles restent réduites et, en tout cas, incompatibles avec les puissances nécessaires à la propulsion d'un sous-marin.

L'invention a donc pour but de proposer un dispositif de production d'électricité du type comprenant une pile à combustible destiné à équiper un sous-marin et permettant de pallier aux difficultés précitées et, en particulier, permettant d'obtenir de fortes puissances, ayant des performances accrues notamment en terme d'autonomie, tout en ne comprenant qu'un nombre réduit d'équipements constitutifs.

Pour cela l'invention a pour objet un sous-marin comportant un dispositif de production d'électricité comprenant une pile à combustible, des moyens d'alimentation en gaz oxygéné, des moyens d'alimentation en combustible hydrogéné et des moyens d'évacuation des gaz effluents. Le sous-marin se caractérisant en ce que la pile à combustible est une pile à reformage interne fonctionnant à haute température et à haute pression, la pression de fonctionnement de la pile étant supérieure ou égale à une pression d'immersion du sous-marin, en ce que les moyens d'alimentation en gaz oxygéné et les moyens d'alimentation en combustible hydrogéné sont propres à amener le gaz oxygéné et le combustible hydrogéné à une pression adaptée à la pression de fonctionnement pour que le gaz oxygéné et le combustible hydrogéné soient injectés directement dans la pile, et en ce que les moyens d'évacuation des gaz effluents sont aptes à évacuer les gaz effluents à l'extérieur du sous-marin en plongée.

Suivant des modes particuliers de l'invention, le sous-marin comporte une ou plusieurs des caractéristiques suivantes, prisent isolément ou suivant toutes les combinaisons techniquement possibles :
- les moyens d'évacuation des gaz effluents comportent un circuit d'évacuation des gaz effluents muni d'une vanne de régulation de pression permettant de maintenir la pression de fonctionnement au-dessus de la pression d'immersion.
- les moyens d'évacuation des gaz effluents comportent, en outre, un brûleur aval relié en entrée, d'une part, à une cathode de la pile à combustible et, d'autre part, à une anode de la pile à combustible, et relié en sortie à la vanne de régulation de pression.
- les moyens d'évacuation des gaz effluents comprennent, en outre, un dispositif de récupération de l'énergie thermique des gaz effluents.
- le dispositif de récupération de l'énergie thermique des gaz effluents est un circuit secondaire comportant un générateur de vapeur, une turbine à vapeur couplé à un alternateur, un condenseur de vapeur et une pompe de recirculation, le générateur de vapeur étant couplé au circuit d'évacuation des gaz effluents.
- les moyens d'alimentation en gaz oxygéné comportent un réservoir d'oxygène apte à contenir de l'oxygène pur en phase liquide.
- les moyens d'alimentation en gaz oxygéné comportent un vaporisateur apte à générer de l'oxygène gazeux pour alimenter la pile à combustible, et une pompe apte à introduire de l'oxygène liquide dans le vaporisateur à une pression adaptée à la pression de fonctionnement.
- les moyens d'alimentation en combustible hydrogéné comportent un réservoir d'hydrocarbure et une pompe apte à introduire du combustible hydrogéné dans la pile à combustible à la pression de fonctionnement.
- les moyens d'alimentation en combustible hydrogéné comprennent, en outre, un brûleur aval connecté entre la pompe et la pile à combustible, le brûleur aval étant alimenté en comburant par une dérivation des moyens d'alimentation en gaz oxygéné, le brûleur aval constituant un système de préchauffage du combustible hydrogéné.
- au moins la pile à combustible est implantée dans une enceinte résistante à la pression dont la pression interne est maintenue à la pression de fonctionnement de la pile à combustible.
- la pression de fonctionnement de la pile à combustible est supérieure ou égale à 10 bars, et de préférence supérieure ou égale à une pression d'immersion maximale du sous-marin.

L'invention a également pour objet un dispositif de production d'électricité pour un sous-marin, du type comportant une pile à combustible, des moyens d'alimentation en gaz oxygéné, des moyens d'alimentation en combustible hydrogéné et des moyens d'évacuation des gaz effluents. Ce dispositif se caractérise en ce que la pile à combustible est une pile à reformage interne fonctionnant à haute température et à haute pression, la pression de fonctionnement de la pile étant supérieure ou égale à une pression d'immersion du sous-marin, en ce que les moyens d'alimentation en gaz oxygéné et les moyens d'alimentation en combustible hydrogéné sont propres à amener le gaz oxygéné et le combustible hydrogéné à une pression adaptée à la pression de fonctionnement pour que le gaz oxygéné et le combustible hydrogéné soient injectés directement dans la pile, et en ce que les moyens d'évacuations des gaz effluents sont aptes à évacuer les gaz effluents à l'extérieur du sous-marin lorsque le sous-marin est en plongée.

L'invention et ses avantages seront mieux compris à la lecture de la description qui va suivre, donnée uniquement à titre d'exemple, et faite en se référant aux dessins annexés, dans lesquels :
- la figure 1 est une représentation schématique d'un sous-marin selon l'invention ;
- la figure 2 représente schématiquement un mode de réalisation d'une pile à reformage interne mise en oeuvre dans le dispositif de production d'électricité de la Figure 1 ;
- la figure 3 représente un dispositif de production d'électricité de la figure 1 ;
- la figure 4 représente une variante de réalisation du dispositif de production d'électricité de la figure 1 ; et,
- la figure 5 représente une variante de réalisation du dispositif de production d'électricité de la figure 1.

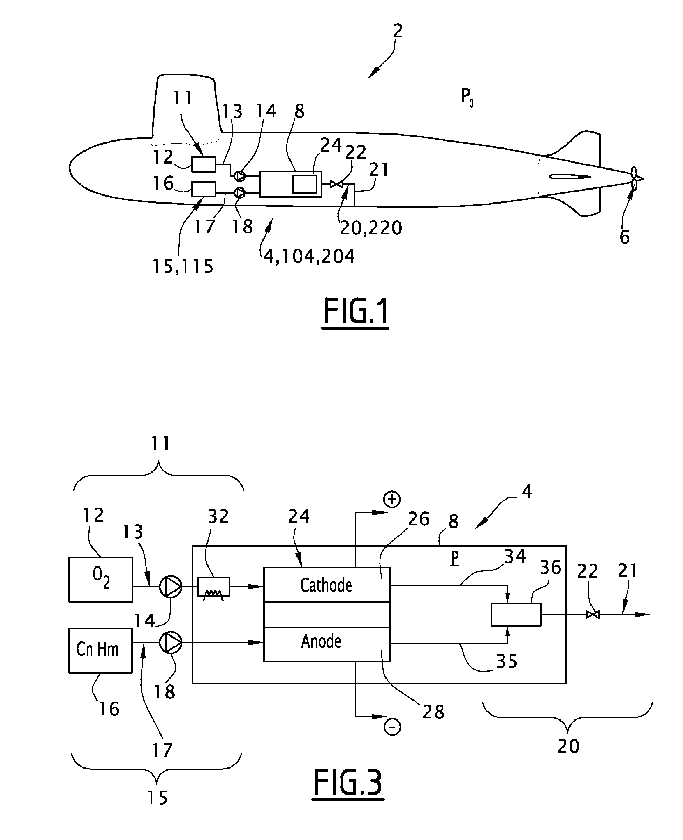

La figure 1 représente schématiquement un sous-marin 2 équipé d'un dispositif de production d'électricité 4 apte à fournir une puissance électrique. De préférence, le dispositif de production d'électricité 4 alimente notamment un moteur (non représenté) d'entraînement des moyens de propulsion 6 du sous-marin 2 et génère une puissance suffisante pour entraîner ces moyens de propulsion 6.

Le dispositif de production d'électricité 4 comporte une pile 24 qui est une pile à combustible à reformage interne fonctionnant à haute température et à haute pression.

La température de fonctionnement de la pile est entre 800° et 1000°C, et de préférence de l'ordre de 950°C.

La pression de fonctionnement P de la pile à combustible est supérieure ou égale à la pression d'immersion P₀ qui est exercée par l'eau de mer sur la coque du sous-marin et qui dépend de la profondeur à laquelle est immergé le sous-marin. Le sous-marin 2 est conçu pour résister à des pressions d'immersion P₀ inférieures ou égales à une pression d'immersion maximale P₀ₘₐₓ. La pression de fonctionnement P de la pile à combustible est, de préférence, supérieure à la pression d'immersion maximale P₀ₘₐₓ. et, en tout cas, supérieure à 10 bars.

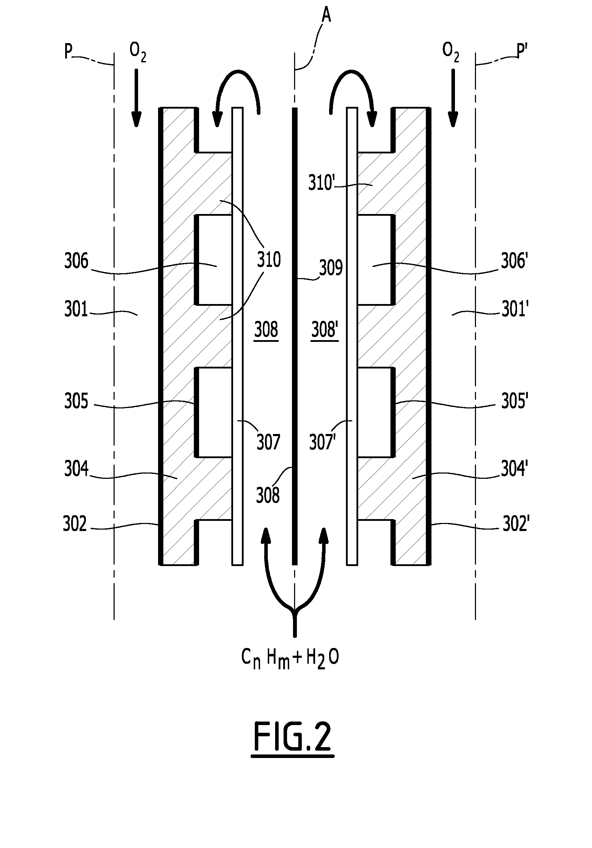

Dans le mode de réalisation actuellement envisagé représenté sur la figure 2, la pile 24 comporte un empilement périodique de cellules sensiblement planes.

La figure 2 représente une période de cet empilement, située entre deux plans P et P'. Cette période comporte, de part et d'autre d'un plan A de symétrie, des cellules de circulation d'oxygène 301, 301', des cathodes 302, 302', des membranes d'électrolyte 304, 304', des anodes 305, 305', des cellules de circulation du reformat 306, 306', des parois de séparation 307, 307', des cellules de circulation du combustible hydrogéné 308, 308', et une paroi médiane de catalyse 309.

La membrane d'électrolyte 304, respectivement 304', est une membrane poreuse séparant la cathode de l'anode 28 tout en autorisant l'échange d'ions entre ces dernières.

La paroi médiane de catalyse 309 est en un matériau adapté pour favoriser le reformage. Ce matériau est, par exemple, du Nickel.

Le mélange combustible hydrogéné et vapeur d'eau est injecté directement dans les cellules de circulation 308 et 308' situées entre les deux parois de séparation 307 et 307' et circule le long de la paroi médiane de catalyse 309. Les conditions de température et de pression sont telles qu'une réaction de vaporeformage a lieu.

Le vaporeformage (SMR pour « SteaM Reforming » en anglais), qui est la réaction de reformage présentant le meilleur rendement de conversion, est une réaction endothermique catalytique qui produit de l'hydrogène par réaction d'un hydrocarbure avec l'eau. Par exemple, si l'hydrocarbure est du méthane, la réaction est la suivante :

CH₄ + H₂O → CO + 3H₂

Les produits de cette réaction de reformage, ou reformats, sont mis en mouvement par convection et circulent dans la pile 24. Ils parviennent dans les cellules de circulation du reformat 306 et 306'.

Des réactions d'oxydo-réduction ont alors lieu qui génèrent de la chaleur et un courant électrique disponible entre chaque paire anode / cathode 302-305 et 302'-305'.

La face de la membrane d'électrolyte 304, respectivement 304', orientée vers la paroi médiane de catalyse 309 est munie de saillies 310, respectivement 310', venant en contact de la paroi de séparation en vis-à-vis, 307, respectivement 307'. Ces saillies forment des ponts thermiques qui transfèrent la chaleur des réactions d'oxydo-réduction vers les cellules de circulation du combustible hydrogéné 308, 308' de sorte que la chaleur produite par les réactions d'oxydo-réduction apporte la chaleur nécessaire à l'entretien des réactions de reformage, qui sont des réactions endothermiques.

Il est à noter que les réactions de reformage et d'oxydo-réduction se produisent à des températures similaires.

La pile à reformage interne présente ainsi l'avantage d'optimiser la gestion des flux thermiques. En particulier, pour le fonctionnement en régime établi, il n'y a plus besoin de moyen additionnel de chauffage du réacteur de reformage, tel qu'un brûleur consommant de l'oxygène.

La pile à reformage interne présente également l'avantage de permettre la suppression des moyens de reformage et de purification qui, dans l'art antérieur, sont situés en amont et à l'extérieur de la pile. Le dispositif mettant en oeuvre une pile à reformage interne est par conséquent plus compact.

En se reportant à nouveau à la figure 1, le dispositif de production d'électricité 4 comporte une enceinte 8 à l'intérieure de laquelle est implantée la pile 24. L'enceinte 8 est résistante à la pression et est maintenue à une pression interne égale à la pression de fonctionnement P de la pile 24. Cette disposition permet de confiner la pile 24 et d'augmenter la sécurité du dispositif de production d'électricité embarqué à bord d'un sous-marin.

A l'amont de la pile à combustible, le dispositif de production d'électricité 4 comporte des moyens d'alimentation en gaz oxygéné, indiqués de manière générale par la référence 11, et des moyens d'alimentation en combustible hydrogéné, indiqués de manière générale par la référence 15.

A l'aval de l'enceinte 8, le dispositif de production d'électricité 4 comporte des moyens d'évacuations des effluents produits par la pile à combustible, indiqués de manière générale par la référence 20. Les moyens d'évacuations des effluents 20 permettent de rejeter les sous-produits des réactions chimiques qui ont lieu dans la pile 24, à l'extérieur du sous-marin 2, directement dans la mer, à tout moment de la plongée. De cette manière, il n'est pas nécessaire de prévoir des moyens de stockage des effluents à l'intérieur du sous-marin et cela contrairement aux dispositifs de l'art antérieur.

C'est pour cela que la pile à combustible doit avoir une pression de fonctionnement supérieure à la pression de plongée du sous-marin de façon à produire des effluents à une pression supérieure à la pression de l'eau à l'extérieur du sous-marin, sans qu'il soit nécessaire d'augmenter la pression de ces effluents à l'aide, par exemple, d'un compresseur.

La figure 3 illustre en détail un dispositif de production d'électricité 4 selon l'invention.

Sur cette figure, on a représenté schématiquement la pile 24, implantée dans l'enceinte 8 résistante à la pression, en représentant une cathode 26, formant le pôle positif d'un générateur de courant électrique, une anode 28, formant le pôle négatif du générateur de courant électrique.

En amont de la pile 24, les moyens d'alimentation en gaz oxygéné 11 comprennent un réservoir 12 apte à contenir de l'oxygène liquide et un circuit 13 reliant le réservoir 12 à la cathode 26 de la pile 24. Le circuit 13 est muni d'une pompe 14 et d'un vaporisateur 32, disposés en série. La pompe 14 augmente la pression de l'oxygène liquide amené depuis le réservoir 12 pour l'introduire dans le vaporisateur 32 où règne une pression égale à la pression de fonctionnement P de la pile à combustible 24. Le vaporisateur 32 permet, en lui transférant une quantité de chaleur adaptée, de vaporiser l'oxygène liquide introduit par la pompe 14, de manière à alimenter la cathode 26 en oxygène à l'état gazeux.

L'oxygène liquide utilisé est du dioxygène O₂ et de préférence du dioxygène pur.

L'alimentation de la pile à combustible à partir d'un réservoir d'oxygène liquide par l'intermédiaire d'une pompe qui introduit l'oxygène liquide à une pression élevée dans le vaporisateur présente l'avantage de consommer moins d'énergie qu'un pompage sur un gaz à la pression ordinaire, dans le but d'élever la pression de l'oxygène à la pression régnant à l'intérieur de l'enceinte.

En amont de la pile à combustible 24, les moyens d'alimentation en combustible hydrogéné 17 comprennent un réservoir de combustible hydrogéné 16 et un circuit 17 reliant le réservoir 16 à l'anode 28 de la pile à combustible 24. Le circuit 17 est muni d'une pompe 18 permettant d'augmenter la pression du combustible hydrogéné amené depuis le réservoir 16, pour l'introduire directement au niveau de l'anode 28 où règne une pression égale à la pression de fonctionnement P de la pile à combustible.

Le combustible hydrogéné est un hydrocarbure ou un mélange d'hydrocarbures de formule générique CₙHₘ. ou CₙHₘOₚ.

En aval de la pile à combustible 24, les moyens d'évacuation des effluents 20 comprennent un brûleur aval 36 relié, en entrée, par un premier circuit 34, à la cathode 26 de la pile 24 et, par un second circuit 35, à l'anode 28 de la pile 24. Le brûleur aval 36 est relié, en sortie, par un circuit d'évacuation 21 à une bouche située sur la coque du sous-marin 2 et s'ouvrant à l'extérieur de celui-ci. Le circuit d'évacuation 21 est muni d'une vanne de régulation de pression 22 pour pouvoir maintenir la pression de fonctionnement de la pile 24 au-dessus de la pression d'immersion P₀, en contrôlant le débit des gaz effluents.

Le fonctionnement du dispositif de production d'électricité 4 du sous-marin 2 va maintenant être décrit.

La pompe 14 des moyens d'alimentation en gaz oxygéné 11 est actionnée pour amener une quantité de d'oxygène liquide depuis le réservoir 12 dans le vaporisateur 32 où cette quantité d'oxygène subit un changement de phase. L'oxygène gazeux est ensuite introduit dans la cathode 26.

Parallèlement, la pompe 18 des moyens d'alimentation en combustible hydrogéné est actionnée pour amener une quantité de combustible hydrogéné depuis le réservoir 16, directement dans la pile 24.

A l'intérieur de la pile 24, une première étape de vaporeformage du combustible hydrogéné a lieu. Elle est rendue possible par la température de fonctionnement élevée de l'ordre de 950°C. Au cours de cette première étape réactionnelle, le combustible hydrogéné est transformé selon la réaction chimique suivante :

Cₘ Hₙ + m H₂O → m CO + (m + n/2) H₂

Le mélange obtenu, riche en dihydrogène subit une seconde étape d'oxydoréductions, selon les équations réactionnelles suivantes :

H₂ + ½ O₂ → H₂O et CO+1/2 O2 → CO2.

Une partie de l'eau produite lors de la seconde étape d'oxydoréduction est utilisée dans la première étape de vaporeformage. Ainsi, le dispositif de production d'électricité 4 est autonome en eau.

Les effluents évacués de la pile 24 sont introduits dans le brûleur aval 36. Les effluents brûlés sont extraits du brûleur 36 à la pression de fonctionnement P de la pile à combustible et rejetés, via la vanne de régulation de pression 22, dans l'eau de mer à l'extérieur du sous-marin 2 en plongée.

Dans le le dispositif qui vient d'être décrit, le vaporisateur 32 et le brûleur aval 36 sont implantés dans l'enceinte sous pression 8.

En variante, le brûleur aval 36 est implanté à l'extérieur de l'enceinte 8 et/ou le vaporisateur 32 est placé à l'extérieur de l'enceinte 8.

Pour initier les réactions chimiques devant avoir lieu dans la pile 24, le dispositif de production d'électricité doit être démarré au moyen d'un système de préchauffage du combustible hydrogéné. Une fois que la pile est démarrée, le préchauffage du combustible n'est plus utile. Dans le dispositif qui vient d'être présenté, le système de préchauffage est externe au dispositif de production d'électricité 4. Il se trouve soit à quai, soit embarqué à bord du sous-marin 2.

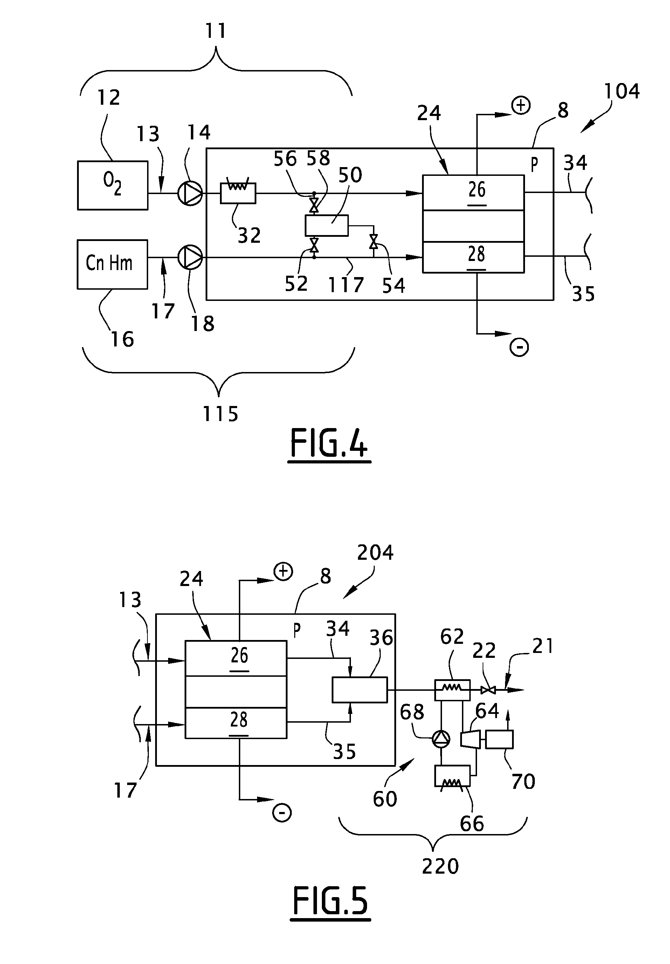

Dans la variante de réalisation représentée à la figure 4 le système de préchauffage est intégré au dispositif de production d'électricité de manière à conférer à ce dernier une autonomie de fonctionnement au démarrage.

Selon cette variante, les moyens d'alimentation en combustible hydrogéné 115 du dispositif de production d'électricité 104 comportent un brûleur amont 50 en tant que système de préchauffage. Le brûleur amont 50 est placé en parallèle d'une canalisation 117 du circuit 17 d'alimentation en combustible hydrogéné, entre la pompe 18 et l'anode 28. Des première et seconde vannes 52 et 54 permettent de connecter ou d'isoler le brûleur amont 50 de la canalisation 117. Lorsque les première et seconde vannes 52 et 54 sont ouvertes, une fraction du flux de combustible hydrogéné amené par la pompe 18 circule dans le brûleur amont 50.

Le brûleur amont 50 est alimenté en comburant par une canalisation 56 connectée en dérivation du circuit d'alimentation en gaz oxygéné 13. Le brûleur amont 50 est placé en aval du vaporisateur 32. La canalisation 56 comporte une troisième vanne 58 permettant, lorsqu'elle est ouverte, d'alimenter le brûleur amont 50 en gaz oxygéné sous forme gazeuse.

Le brûleur amont 50 est utilisé uniquement au démarrage du dispositif de production d'électricité 104 pour réaliser un préchauffage des équipements utilisés dans les réactions chimiques devant se produire au niveau de la pile à combustible 24. Une fois que les réactions chimiques sont initiées, les vannes 52, 54 et 58 sont fermées pour isoler le brûler amont 50 des circuits d'alimentation 13 et 17. L'alimentation en combustible hydrogéné se fait alors directement du réservoir de combustible hydrogéné 16 vers l'anode 28 via la pompe 18 et la canalisation 117.

Différentes alternatives peuvent être envisagées pour cette variante du dispositif de production d'électricité. En particulier, le brûleur amont 50 peut être implanté hors de l'enceinte 8.

La figure 5 représente une variante du dispositif de production d'électricité de la figure 1. Dans cette variante, indépendante des précédentes, la pile à combustible et ses moyens d'alimentation sont identiques à l'un ou l'autre des modes de réalisation, mais les moyens d'évacuation des effluents 220 du dispositif de production d'électricité 204 comprennent, en outre, un moyen de récupération d'énergie thermique. En effet, pour augmenter le rendement du dispositif de production d'électricité, il est avantageux de récupérer une fraction de l'énergie thermique des gaz effluents, ceux-ci ayant une température proche de 950°C en sortie de la pile 24 et du brûleur aval.

Le moyen de récupération d'énergie thermique est constitué par un circuit secondaire 60. Le circuit secondaire 60 comporte un générateur de vapeur 62, une turbine à vapeur 64, un condenseur de vapeur 66 et une pompe 68 de recirculation du fluide circulant dans le circuit secondaire 60.

Comme dans les modes de réalisation précédents, le circuit 21 d'évacuation du gaz comporte une vanne de régulation de pression 22 permettant de maintenir la pression en amont supérieure à la pression régnant à l'extérieur du sous-marin.

Le générateur de vapeur 62 est connecté au circuit 21 d'évacuation des gaz effluents, en tant que circuit primaire fournissant la chaleur nécessaire à la vaporisation du liquide du circuit secondaire 60.

Comme dans les modes de réalisation précédents, le circuit 21 d'évacuation des gaz comporte une vanne de régulation de pression 22 permettant de maintenir la pression en amont supérieure à la pression régnant à l'extérieur du sous-marin.

La turbine à vapeur 64 est couplée à un alternateur 70 générant une puissance électrique additionnelle.

La puissance électrique additionnelle fourni par le circuit secondaire 60 peut représenter de l'ordre de 15% de la puissance électrique totale générée par le dispositif de production d'électricité 204 qui présente, de ce fait, un rendement global élevé pouvant aller jusqu'à environ 65%.

L'utilisation d'un générateur de vapeur 62 permet de conserver le potentiel de pression des gaz effluents, tout en récupérant une partie de leur énergie thermique. On conserve ainsi la possibilité de rejeter directement les gaz effluents dans la mer.

Le dispositif de production d'électricité selon l'invention fournit des puissances électriques importantes. Avec un dimensionnement adapté, un tel dispositif de production d'électricité peut être rendu compatible avec une utilisation en tant que source de puissance électrique pour l'alimentation des moyens de propulsion du sous-marin.

L'utilisation d'une pile à combustible fonctionnant à haute température permet de réaliser les réactions de reformage directement à l'intérieur de la pile. De plus, cette pile est beaucoup moins sensible aux polluants que les piles basse température, de sorte qu'une multitude de carburants peuvent être utilisés pour l'apport d'hydrogène. L'utilisation d'une pile à combustible fonctionnant à haute pression permet de rejeter directement les effluents dans l'eau de mer.

## Revendications

1. Dispositif de production d'électricité pour un sous-marin, du type comportant une pile à combustible (24), des moyens d'alimentation en gaz oxygéné (11), des moyens d'alimentation en combustible hydrogéné (15, 115) et des moyens d'évacuation des gaz effluents (20, 220), **caractérisé en ce que** la pile à combustible (24) est une pile à reformage interne fonctionnant à haute température et à haute pression, la pression de fonctionnement (P) de la pile étant supérieure ou égale à une pression d'immersion (P₀) du sous-marin (2),
**en ce que** les moyens d'alimentation en gaz oxygéné (11) et les moyens d'alimentation en combustible hydrogéné (15, 115) sont propres à amener le gaz oxygéné et le combustible hydrogéné à une pression adaptée à la pression de fonctionnement pour que le gaz oxygéné et le combustible hydrogéné soient injectés directement dans la pile,
et **en ce que** les moyens d'évacuations des gaz effluents (20, 220) sont aptes à évacuer les gaz effluents à l'extérieur du sous-marin lorsque le sous-marin est en plongée, sans faire chuter la pression dans la pile à combustible.

2. Sous-marin comportant un dispositif de production d'électricité, **caractérisé en ce que** ledit dispositif est un dispositif de production d'électricité (4, 104, 204) conforme à la revendication 1.

3. Sous-marin selon la revendication 2, **caractérisé en ce que** les moyens d'évacuation des gaz effluents (20, 220) comportent un circuit d'évacuation des gaz effluents (21) muni d'une vanne de régulation de pression (22) permettant de maintenir la pression de fonctionnement (P) au-dessus de la pression d'immersion (P₀).

4. Sous-marin selon la revendication 3, **caractérisé en ce que** les moyens d'évacuation des gaz effluents (20, 220) comportent, en outre, un brûleur aval (36) relié en entrée, d'une part, à une cathode (26) de la pile à combustible (24) et, d'autre part, à une anode (28) de la pile à combustible (24), et relié en sortie à la vanne de régulation de pression (22).

5. Sous-marin selon la revendication 3 ou la revendication 4, **caractérisé en ce que** les moyens d'évacuation des gaz effluents (220) comprennent, en outre, un dispositif de récupération de l'énergie thermique des gaz effluents.

6. Sous-marin selon la revendication 5, **caractérisé en ce que** le dispositif de récupération de l'énergie thermique des gaz effluents est un circuit secondaire (60) comportant un générateur de vapeur (62), une turbine à vapeur (64) connecté à un alternateur (70), un condenseur de vapeur (66) et une pompe de recirculation (68), le générateur de vapeur étant couplé au circuit d'évacuation des gaz effluents (21).

7. Sous-marin selon l'une quelconque des revendications 2 à 6, **caractérisé en ce que** les moyens d'alimentation en gaz oxygéné (11) comportent un réservoir d'oxygène (12) apte à contenir de l'oxygène pur en phase liquide.

8. Sous-marin selon la revendication 7, **caractérisé en ce que** les moyens d'alimentation en gaz oxygéné (11) comportent un vaporisateur (32) apte à générer de l'oxygène gazeux pour alimenter la pile à combustible (24), et une pompe (14) apte à introduire de l'oxygène liquide dans le vaporisateur à une pression adaptée à la pression de fonctionnement (P).

9. Sous-marin selon l'une quelconque des revendications 1 à 8, **caractérisé en ce que** les moyens d'alimentation en combustible hydrogéné (15, 115) comportent un réservoir d'hydrocarbure (16) et une pompe (18) apte à introduire du combustible hydrogéné dans la pile à combustible (24) à la pression de fonctionnement (P).

10. Sous-marin selon la revendication 9, **caractérisé en ce que** les moyens d'alimentation en combustible hydrogéné (115) comprennent, en outre, un brûleur amont (50) connecté entre la pompe (18) et la pile à combustible (24), le brûleur amont (50) étant alimenté en comburant par une dérivation des moyens d'alimentation en gaz oxygéné (11), ledit brûleur amont (50) constituant un système de préchauffage du combustible hydrogéné.

11. Sous-marin selon l'une quelconque des revendications 1 à 10, **caractérisé en ce qu'**au moins la pile à combustible (24) est implantée dans une enceinte (8) résistante à la pression dont la pression interne est maintenue à la pression de fonctionnement (P) de la pile à combustible.

12. Sous-marin selon l'une quelconque des revendications 1 à 11, **caractérisé en ce que** la pression de fonctionnement (P) de la pile à combustible (24) est supérieure ou égale à 10 bars, et de préférence supérieure ou égale à une pression d'immersion maximale (P₀ₘₐₓ) du sous-marin (2).

## Patentansprüche

1. Vorrichtung zur Erzeugung von Elektrizität für ein Unterseeboot, der Art, die eine Brennstoffzelle (24), Mittel (11) zur Versorgung mit sauerstoffhaltigem Gas, Mittel (15, 115) zur Versorgung mit wasserstoffhaltigem Brennstoff und Mittel (20, 220) zur Evakuierung von Abgasen umfasst, **dadurch gekennzeichnet,**
**dass** die Brennstoffzelle (24) eine Zelle mit interner Reformierung ist, die mit hoher Temperatur und hohem Druck arbeitet, wobei der Betriebsdruck (P) der Zelle größer oder gleich einem Tauchdruck (P₀) des Unterseebootes (2) ist,
**dass** die Mittel (11) zur Versorgung mit sauerstoffhaltigem Gas und die Mittel (15, 115) zur Versorgung mit wasserstoffhaltigem Brennstoff geeignet sind, das sauerstoffhaltige Gas und den wasserstoffhaltigen Brennstoff auf einen Druck zu bringen, der an den Betriebsdruck angepasst ist, damit das sauerstoffhaltige Gas und der wasserstoffhaltige Brennstoff direkt in die Zelle eingespritzt werden können,
und **dass** die Mittel (20, 220) zur Evakuierung von Abgasen geeignet sind, die Abgase nach außen in Bezug auf das Unterseeboot abzulassen, wenn das Unterseeboot getaucht ist, ohne den Druck in der Brennstoffzelle abfallen zu lassen.

2. Unterseeboot mit einer Vorrichtung zur Erzeugung von Elektrizität,
**dadurch gekennzeichnet, dass** die Vorrichtung eine Vorrichtung (4, 104, 204) zur Erzeugung von Elektrizität entsprechend dem Anspruch 1 ist.

3. Unterseeboot nach Anspruch 2, **dadurch gekennzeichnet, dass** die Mittel (20, 220) zur Evakuierung von Abgasen einen Evakuierungskreis (21) für Abgase umfasst, der mit einem Ventil (22) zur Steuerung des Drucks ausgerüstet ist, das die Aufrechterhaltung des Betriebsdrucks (P) über dem Tauchdruck (P₀) gestattet.

4. Unterseeboot nach Anspruch 3, **dadurch gekennzeichnet, dass** die Mittel (20, 220) zur Evakuierung von Abgasen außerdem einen stromabwärts gelegenen Brenner (36) aufweisen, der am Eingang einerseits mit einer Kathode (26) der Brennstoffzelle (24) und andererseits mit einer Anode (28) der Brennstoffzelle (24) verbunden ist und der am Ausgang mit dem Ventil (22) zur Steuerung des Drucks verbunden ist.

5. Unterseeboot nach Anspruch 3 oder Anspruch 4, **dadurch gekennzeichnet, dass** die Mittel (220) zur Evakuierung von Abgasen außerdem eine Vorrichtung zur Wiedergewinnung der thermischen Energie der Abgase umfassen.

6. Unterseeboot nach Anspruch 5, **dadurch gekennzeichnet, dass** die Vorrichtung zur Wiedergewinnung der thermischen Energie der Abgase ein Sekundärkreis (60) ist, der einen Dampfgenerator (62), eine Dampfturbine (64), die mit einem Wechselstromgenerator (70) verbunden ist, einen Dampfkondensor (66) und eine Rezirkulationspumpe (68) umfasst, wobei der Dampfgenerator mit dem Evakuierungskreis der Abgase (21) gekoppelt ist.

7. Unterseeboot nach einem beliebigen der Ansprüche 2 bis 6, **dadurch gekennzeichnet, dass** die Mittel (11) zur Versorgung mit sauerstoffhaltigem Gas einen Sauerstoffbehälter (12) aufweisen, der geeignet ist, reinen Sauerstoff in flüssiger Phase zu enthalten.

8. Unterseeboot nach Anspruch 7, **dadurch gekennzeichnet, dass** die Mittel (11) zur Versorgung mit sauerstoffhaltigem Gas einen Verdampfer (32), der geeignet ist, gasförmigen Sauerstoff zu erzeugen, um die Brennstoffzelle (24) zu versorgen, und eine Pumpe (14) aufweisen, die geeignet ist, den flüssigen Sauerstoff in den Verdampfer bei einem Druck, der an den Betriebsdruck (P) angepasst ist, einzuführen.

9. Unterseeboot nach einem beliebigen der Ansprüche 1 bis 8, **dadurch gekennzeichnet, dass** die Mittel (15, 115) zur Versorgung mit wasserstoffhaltigem Brennstoff einen Kohlenwasserstoffbehälter (16) und eine Pumpe (18) aufweisen, die geeignet ist, wasserstoffhaltigen Brennstoff in die Brennstoffzelle (24) bei dem Betriebsdruck (P) einzuführen.

10. Unterseeboot nach Anspruch 9, **dadurch gekennzeichnet, dass** die Mittel (115) zur Versorgung mit wasserstoffhaltigem Brennstoff außerdem einen stromaufwärts gelegenen Brenner (50) umfassen, der zwischen die Pumpe (18) und die Brennstoffzelle (24) geschaltet ist, wobei der stromaufwärts gelegene Brenner (50) durch eine Abzweigung der Mittel (11) zur Versorgung mit sauerstoffhaltigem Gas mit Kraftstoff versorgt wird, wobei der stromaufwärts gelegene Brenner (50) ein System zur Vorheizung des wasserstoffhaltigen Brennstoffs bildet.

11. Unterseeboot nach einem beliebigen der Ansprüche 1 bis 10, **dadurch gekennzeichnet, dass** mindestens die Brennstoffzelle (24) in ein Gehäuse (8) eingesetzt ist, das druckwiderstandsfähig ist, und dessen Innendruck auf dem Betriebsdruck (P) der Brennstoffzelle gehalten wird.

12. Unterseeboot nach einem beliebigen der Ansprüche 1 bis 11, **dadurch gekennzeichnet, dass** der Betriebsdruck (P) der Brennstoffzelle (24) größer oder gleich 10 bar und vorzugsweise größer oder gleich einem maximalen Tauchdruck (P₀ₘₐₓ) des Unterseeboots (2) ist.

## Claims

1. Device for producing electricity for a submarine comprising a fuel cell (24), means for feeding oxygenated gas (11), means for feeding hydrogenated fuel (15, 115), and means for discharging the gaseous effluents (22, 220), **characterized in that** the fuel cell (24) is an internal reforming cell operating at a high temperature and a high pressure, the operating pressure (P) of the cell being greater than or equal to an immersion pressure (P₀) of the submarine (2),
**in that** the means for feeding oxygenated gas (11) and the means for feeding hydrogenated fuel (15, 115) are capable of bringing the oxygenated gas and the hydrogenated fuel to a pressure adapted to the operating pressure so that the oxygenated gas and the hydrogenated fuel are injected directly into the cell,
and **in that** the means for discharging the gaseous effluents (20, 220) are capable of discharging the gaseous effluents outside the submarine during diving without pressure drop inside the cell.

2. Submarine comprising a device for producing electricity, **characterized in that** said device is a Device for producing electricity (4, 104, 204) according to claim 1.

3. Submarine according to claim 2, **characterized in that** the means for discharging the gaseous effluents (20, 220) include a circuit (21) for discharging the gaseous effluents provided with a pressure regulating valve (22) making it possible to keep the operating pressure (P) above the immersion pressure (P₀).

4. Submarine according to claim 3, **characterized in that** the means for discharging the gaseous effluents (20, 220) also include a downstream burner (36) connected at the input, on the one hand, to a cathode (26) of the fuel cell (24) and, on the other hand, to an anode (28) of the fuel cell (24), and connected at the output to the pressure regulating valve (22).

5. Submarine according to claim 3 or claim 4, **characterized in that** the means for discharging the gaseous effluents (220) also include a device for recovering the thermal energy of the gaseous effluents.

6. Submarine according to claim 5, **characterized in that** the device for recovering the thermal energy from the gaseous effluents is a secondary circuit (60) including a steam generator (62), a steam turbine (64) coupled to an alternator (70), a steam condenser (66) and a recirculation pump (68), the steam generator being coupled to the circuit for discharging the gaseous effluents (21).

7. Submarine according to any one of claims 2 to 6, **characterized in that** the means for feeding oxygenated gas (11) include an oxygen tank (12) that can contain pure oxygen in liquid phase.

8. Submarine according to claim 7, **characterized in that** the means for feeding oxygenated gas (11) include a sprayer (32) able to generate gaseous oxygen to feed the fuel cell (24), and a pump (14) able to introduce liquid oxygen into the sprayer at a pressure adapted to the operating pressure (P).

9. Submarine according to any one of claims 2 to 8, **characterized in that** the means for feeding hydrogenated fuel (15, 115) include a hydrocarbon tank (16) and a pump (18) that can introduce hydrogenated fuel into the fuel cell (24) at the operating pressure (P).

10. The submarine according to claim 9, **characterized in that** the means for feeding hydrogenated fuel (115) also comprise an upstream burner (50) connected between the pump (18) and the fuel cell (24), the upstream burner (50) being supplied with fuel by a bridge of the means for feeding oxygenated gas (11), the upstream burner (50) constituting a system for preheating the hydrogenated fuel.

11. Submarine according to any one of claims 2 to 10, **characterized in that** at least the fuel cell (24) is installed in a pressure-resistant enclosure (8) whereof the internal pressure is kept at the operating pressure (P) of the fuel cell.

12. The submarine according to any one of claims 2 to 11, **characterized in that** the operating pressure (P) of the fuel cell (24) is greater than or equal to 10 bars, and preferably greater than or equal to a maximum immersion pressure (P₀ₘₐₓ) of the submarine (2).
